# EUROPÄISCHE PATENTSCHRIFT

(11) **EP 0 756 812 B1**
(45) Veröffentlichungstag und Bekanntmachung des Hinweises auf die Patenterteilung: **03.03.1999**
(21) Anmeldenummer: 96111761.1
(22) Anmeldetag: 22.07.1996
(51) Int. Cl.: A01C 7/04

(54) **Dosiergerät für Saatgut**
Dosing device for seeds
Dispositif de dosage pour semences

(30) Priorität: 02.08.1995 US 510447
(43) Veröffentlichungstag der Anmeldung: 05.02.1997
(73) Patentinhaber: Deere & Company, Moline, Illinois 61265-8098 (US)
(72) Erfinder: Schick, Jeffry Carl, Ankery, Iowa 50021 (US); Wisor, Donald Raymond, Moline, Illinois 61265 (US)
(74) Vertreter: Feldmann, Bernhard

(56) Entgegenhaltungen:
- US-A- 3 048 132
- US-A- 5 027 725
- US-A- 5 058 766

## Beschreibung

Die Erfindung bezieht sich auf ein Dosiergerät für Saatgut mit einem einen Einlaß und einen Auslaß aufweisenden Gehäuse, mit einem in dem Gehäuse umlaufenden und Saatgutrinnen aufweisenden Verteilerelement, mit einer das Saatgut in dem Verteilerelement haltenden Halteleiste von geringerer Länge als der Verteilerelementumfang und mit einer Trennleiste für überschüssiges Saatgut.

Bei diesem Dosiergerät (US-A-5 058 766) ist das Gehäuse im wesentlichen ringförmig ausgebildet und nimmt als Verteilerelement eine um eine horizontale Achse umlaufende Säscheibe auf. In einer Scheibenseite der Säscheibe sind Saatgutrinnen vorgesehen, die in umfangmäßig offene und schalenartige Ausbuchtungen münden. Bei dem Durchlaufen des auszusäenden Saatgutes setzen sich einzelne Saatkörner in die Saatgutrinnen und gegebenenfalls auch in die Ausbuchtungen. Über die Trennleiste werden überschüssige Saatgutkörner aus den Saatgutrinnen ausgebürstet, so daß im Idealfall ein einzelnes verbleibendes Saatkorn in die Ausbuchtung gelangt und dort durch die Halteleiste gehalten wird. Die Halteleiste besteht aus einer Vielzahl von koaxial zur Drehachse der Säscheibe angeordneten Bürsten, die seitlich auf die Saatkörner einwirken. Umfangsmäßig werden die Saatkörner durch den Gehäusemantel an einem Austreten gehindert. An der Gutaustrittsseite des Dosiergerätes erweitert sich der Gehäusemantel im Bereich des Halteleistenendes, so daß das Saatgut infolge der Zentrifugalkraft aus den Ausbuchtungen austritt und in den Auslaß fällt. Im Idealfall werden mit diesem Dosiergerät nur einzelne Saatkörner in den Auslaß gelangen. Derartige Dosiergeräte lassen sich im Prinzip bei fast allen Sämaschinen einsetzen, wo es auf eine Einzelkornaussaat ankommt. Sie sind allerdings in ihrem Aufbau aufwendig, eignen sich weniger für die Aussaat von relativ kleinem Saatgut und besser für die Aussaat von relativ großem Saatgut, obwohl auch dann der Vereinzelungsprozeß nicht einfach ist.

Andererseits ist bereits vorgeschlagen worden (US-A-4 609 131), für die Aussaat von relativ kleinem und relativ großem Saatgut ein kombiniertes Dosiergerät vorzusehen, daß für großes Saatgut eine Vereinzelungsscheibe und für kleines Saatgut ein Särad vorsieht.

Die der Erfindung zugrunde liegende Aufgabe wird in einem einfachen Dosiergerät gesehen, mit dem relativ großes Saatgut vereinzelt als einzelnes Saatkorn und relativ kleines Saatgut vereinzelt als einzelnes Saatkorn oder gegebenenfalls vereinzelt als mehrere Saatkörner ausgetragen wird. Die Erfindung sieht hierzu vor, daß das Verteilerelement als Särad mit auf seiner Mantelfläche vorgesehenen und sich radial erstreckenden Rippen ausgebildet ist, zwischen denen die Saatgutrinnen liegen, daß das Särad eine Abgabeseite aufweist, an der die Rippen mit Saatguttaschen bildenden Fingerelementen versehen sind, daß die Halteleiste oberhalb der Saatguttaschen vorgesehen ist und daß die Trennleiste von dem Raum oberhalb des Särades einen mit dem Auslaß verbundenen Saatgutabgaberaum abtrennt, in dem zumindest ein Teil der Halteleiste vorgesehen ist. Auf diese Weise rotiert das Särad durch einen sich in dem Dosiergerät befindlichen Saatgutvorrat. Bei dem Rotationsvorgang wird Saatgut aus dem Saatgutvorrat durch die Saatgutrinnen entnommen. Saatgut an einer Seite der Trennleiste wird in dem Saatgutabgaberaum auf einem bestimmten Abschnitt durch die Halteleiste gehalten und am Ende der Halteleiste infolge der Zentrifugalkraft aus den Saatguttaschen heraus fliegen und in den Auslaß gelangen. Saatgut an der anderen Seite der Trennleiste wird in einem sogenannten und zum Einlaß hin offenen Saatgutaufnahmeraum bei einem Erreichen der Trennleiste bereits zu einem großen Teil in den Bereich mit dem Saatgutvorrat zurückgefallen sein. Verbleibendes Saatgut wird auf die Rotationsgeschwindigkeit des Särades gebracht und kann am Ende der Trennleiste in die Saatguttaschen eintreten. Die Rippen bewirken, daß das Saatgut auf die Umlaufgeschwindigkeit des Särades beschleunigt wird. Die Saatguttaschen sind dabei derart ausgelegt, daß sie entweder nur ein relativ großes Saatkorn oder gegebenenfalls mehrere kleine Saatkörner aufnehmen können.

Damit das Saatgut bei der Rotation des Särades durch den Saatgutvorrat leicht in die Saatguttaschen gedrückt werden kann, kann nach der Erfindung noch zusätzlich vorgesehen sein, daß die Rippen zumindest auf einem Teil ihrer Länge gegenüber der Drehachse des Särades abgewinkelt sind, wobei die Rippen im Bereich der Abgabeseite des Särades koaxial zur Drehachse des Särades verlaufen.

Nach einem weiteren Vorschlag der Erfindung sind die Halteleiste und die Trennleiste nebeneinander an dem Gehäuse angeordnet, wobei die Trennleiste eine größere Länge als die Halteleiste aufweist und der Anfang der Halteleiste mit Bezug auf die Umlaufrichtung des Särades vor dem Anfang der Trennleiste liegt. Zweckmäßig kann die Halteleiste sich von der 11-Uhr-Position bis zur 3-Uhr-Position erstrecken, wobei die Trennleiste sich von der 12-Uhr-Position bis zur 5-Uhr-Position erstreckt. Damit ergeben sich unterschiedlich große Saatgutaufnahme- und Saatgutabgaberäume.

Damit das Saatgut nicht ungewollt in die Saatguttaschen im Bereich des Saatgutabgaberaumes eintritt, kann die Trennleiste mit elastischen Zähnen versehen sein, die sich zumindest teilweise bis in die Saatgutrinnen erstrecken. Zusätzlich kann hierzu vorgesehen sein, daß die Trennleiste zum Abdrängen des Saatgutes von dem Saatgutabgaberaum zumindest auf einem Teil ihrer Länge keilförmig ausgebildet ist.

Schließlich sehen weitere Vorschläge der Erfindung noch vor, daß die Trennleiste mit Bezug auf die Umlaufrichtung des Särades stromabwärts des Auslasses endet, daß der Saatgutabgaberaum stromabwärts des Auslasses durch eine Dichtleiste verschlossen ist und daß eine Regulierungsleiste im Bereich des Trennleistenanfangs vorgesehen ist. Die radiale Länge der Zähne der Trennleiste kann sich schließlich, vom Trennleistenanfang aus gesehen, stetig vergrößern, wobei aber die Halteleiste mit elastischen Zähnen von gleichbleibender Länge versehen ist.

In der Zeichnung ist ein nachfolgend näher erläutertes Ausführungsbeispiel der Erfindung dargestellt. Es zeigt:
- Fig. 1: ein Dosiergerät im Schnitt,
- Fig. 2: einen Schnitt nach der Linie 2 : 2 in Fig. 1,
- Fig. 3: das Särad des Dosiergerätes in Seitenansicht,
- Fig. 4: das Särad nach Fig. 3 in Vorderansicht und
- Fig. 5: die in den Fig. 1 und 2 erkennbare Halteleiste und Trennleiste in einem abgewickelten Zustand.

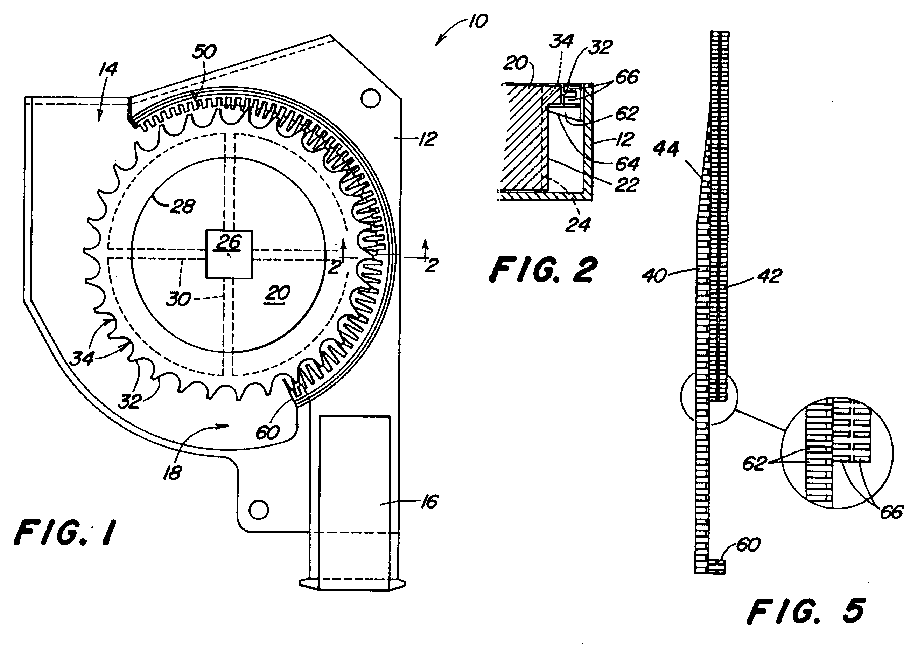

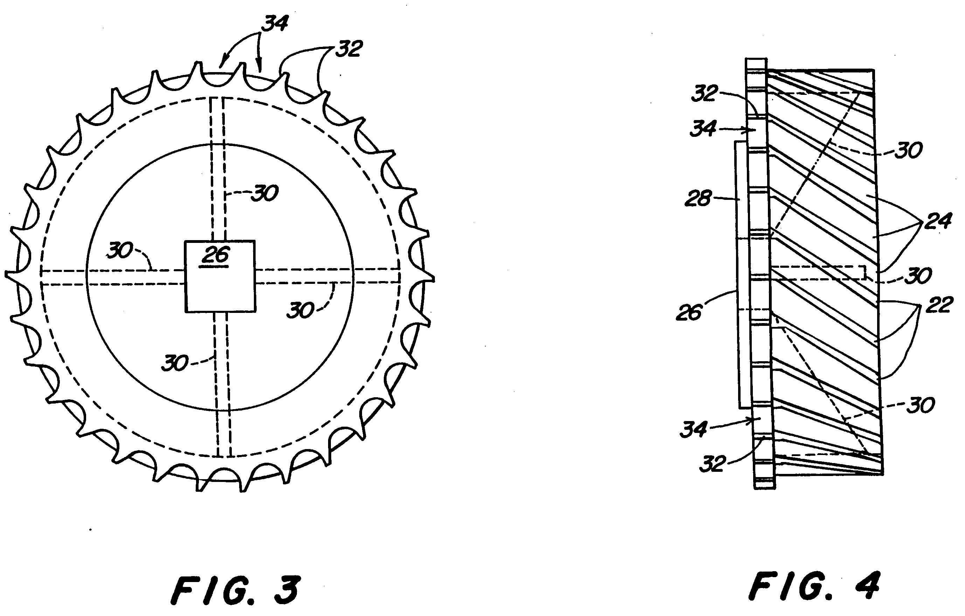

In Fig. 1 der Zeichnung ist ein Dosiergerät für Saatgut mit 10 bezeichnet. Zu dem Dosiergerät gehört ein Gehäuse 12 mit einem Einlaß 14 und einem Auslaß 16 sowie ein Särad 20, das trommelförmig ausgebildet und in dem Gehäuse 12 um eine horizontale Achse umlaufend angeordnet ist. Das Särad 20 weist an seinem Mantel Saatgutzellen auf, die aus sich radial erstreckenden Rippen 22 gebildet sind, so daß zwischen benachbarten Rippen 22 Saatrinnen 24 entstehen. Außerdem sind die Rippen 22 in einem bestimmten Winkel angeordnet, wie es aus Fig. 4 erkennbar ist, d. h. die Saatrinnen 24 verlaufen nicht parallel zur Horizontalen, sondern sind ansteigend angeordnet. Das Innere des Gehäuses 12 folgt in weiten Bereichen der Konfiguration des Särades 20, insbesondere in dem Bereich zwischen der 11- Uhr- und der 5-Uhr-Stellung. Ein unmittelbar stromabwärts des Auslasses 16 liegender Entlastungsbereich 18 folgt der Kontur des Särades nicht.

Das Särad 20 ist gegossen und besteht aus Kunststoff. In seiner Mitte ist für die Aufnahme einer Antriebswelle ein Vierkantloch 26 vorgesehen. Eine umlaufende und axial bzw. seitlich vorstehende Lippe 26 dient zur Führung des Särades in einer entsprechenden Öffnung im Gehäuse. Im übrigen ist das Särad 20 hohl ausgebildet und in seinem Inneren mit vier Verstrebungen 30 versehen.

Aus Fig. 4 ist zu erkennen, daß die schräg verlaufenden Rippen 22 an einer Stirnseite horizontal abgebogen sind. Die Fig. 1 bis 3 zeigen, daß die Rippen in diesem Bereich mit nach außen oder radial gerichteten Fingern 32 versehen sind, so daß zwischen benachbarten Fingern 32 Saataufnahmetaschen 34 entstehen. Die Saataufnahmetaschen sind damit auf dem Mantelumfang angeordnet und haben eine Breite, die von dem auszusäenden Saatgut bestimmt ist. Entsprechendes gilt für die Taschengröße. Bei Saatgut anderer Größe kann das Särad ausgetauscht werden. In der Regel soll eine Tasche ein einzelnes Saatkorn aufnehmen. Je nach den Einsatzverhältnissen können bei kleineren Saatkörnern auch mehrere Körner in einer Tasche Platz finden. Der Bereich mit den Saataufnahmetaschen wird als die Abgabeseite des Särades bezeichnet.

Das Dosiergerät 10 ist des weiteren noch mit einer Trennleiste 40 und mit einer Halteleiste 42 versehen. Die Trennleiste 40 und die Halteleiste 42 sind kammförmig ausgebildet und an der inneren Peripherie des Gehäuses 12 vorgesehen. Die Trennleiste 40 hat elastische in Umlaufrichtung immer länger werdende Zinken oder Bürsten und teilt den Raum zwischen dem Särad 20 und der Ringwand des Gehäuses 12 in einen Saatgutaufnahmeraum und in einen Saatgutabgaberaum auf. Der Saatgutaufnahmeraum kann als der Raum definiert werden, der zwischen dem Gehäuse 12 und dem Särad 20 vorhanden ist, zu dem Einlaß 14 hin offen ist und von dem Auslaß 16 durch die Trennleiste 40 getrennt ist. Entsprechend kann der Saatgutabgaberaum als der Raum definiert werden, der zwischen dem Gehäuse 12 und dem Särad 20 vorhanden ist, zu dem Auslaß 16 hin offen ist und durch die Trennleiste 40 seitlich abgeschlossen ist. Die Halteleiste 42 ist oberhalb der Saattaschen 34 in dem Saatgutabgaberaum vorgesehen, hat eine Länge, die in Umfangsrichtung gesehen etwa von der 11-Uhr-Stellung bis zur 3-Uhr-Stellung reicht, und eine Breite, die der Saattaschenbreite entspricht.

Die Trennleiste 40 ist wesentlich schmaler als die Halteleiste 42 und ihre Zinken oder Borsten haben schließlich eine derartige Länge, daß sie bis in die Saatrinnen 24 reichen. Der Anfang der Trennleiste 40 liegt etwa bei der 12-Uhr-Position unmittelbar neben der Halteleiste 42, ist als Spitze oder Schräge ausgebildet, so daß der Anfangsbereich 44 der Trennleiste 40 keilförmig gestaltet ist, und liegt in Umlaufrichtung gesehen hinter dem Anfang der Halteleiste 42. Damit wird sich in den Saattaschen 34 befindliches Saatgut bereits durch die Halteleiste 42 gehalten, wenn es die 12-Uhr-Position erreicht, während der größte Teil des von dem Särad erfaßten Saatgutes in den Aufnahmeraum zurückfällt, bevor das Särad die 12-Uhr-Position erreicht. Befindet sich in der 12-Uhr-Stellung oder in diesem Bereich noch Saatgut in den Säradzellen, so setzt hier die Wirkung der Keilform des Anfangsbereiches 44 der Trennleiste 40 ein. Die Keilform bewirkt, daß überschüssiges Saatgut in die Saatrinnen 24 und nicht in die Saattaschen 34 gedrängt wird, d. h. Saatgut wird von der Abgabeseite des Särades 20 fort gedrängt. Die Halteelemente der Halteleiste 42 können kamm-, zinken-, leisten- oder sogar bürstenartig sein. Jedenfalls haben sie eine gleichbleibende Länge und erstrecken sich bis zur Oberkante der Finger 32. Damit können sie sich in den Saattaschen 34 befindliches Saatgut leicht halten.

Das Särad 20 läuft mit Bezug auf Fig. 1 im Uhrzeigerdrehsinn um, und in den Saattaschen 34 durch die Halteleiste 42 gehaltenes Saatgut verbleibt in den Taschen, bis es etwa die 3-Uhr-Stellung erreicht, in der die Halteleiste 42 endet. In dieser Stellung befindet sich das einzelne Saatgut in den Saattaschen oberhalb des Auslasses 16 und wird dann infolge der Zentrifugalkraft aus den Taschen gedrückt und in den Auslaß 16 fallen. Die leeren Saatguttaschen werden dann den verbleibenden Bereich im Saatgutabgabebereich durchlaufen und schließlich wieder in den Saatgutaufnahmebereich eintreten, wo sie neues Saatgut aufnehmen.

In den Säradzellen sich außerhalb der Saatguttaschen befindliches Saatgut wird durch den keilförmigen Bereich 44 der Trennleiste nach außen abgedrängt und durch den restlichen Bereich der Trennleiste daran gehindert, von dem Saatgutaufnahmebereich in den Saatgutabgabebereich bzw. zur Saatgutabgabeseite des Särades 20 zu gelangen. Aus Fig. 2 ist zu erkennen, daß sich die Trennleiste nicht über die Breite des Dosiergerätes erstreckt. Das von der Saatgutabgabeseite abgedrängte Saatgut wird durch die Saatgutrinnen in dem Saatgutabgabebereich mit derselben Umlaufgeschwindigkeit rotieren wie das Saatgut in den Saatguttaschen. Auf diese Weise können die entleerten Saatguttaschen 34, wenn sie aus dem Saatgutabgaberaum in den Saatgutaufnahmeraum übertreten, leicht mit Saatgut beschickt werden, das eine Umlaufgeschwindigkeit aufweist, die der der Saatguttaschen entspricht.

Eine Regulierungsleiste 50 für die Menge erstreckt sich im Saatgutaufnahmeraum im Bereich des keilförmigen Teils 44 der Trennleiste 40 quer zum Gehäuse. Über die Regulierungsleiste 50 soll das Saatgut in den Saatrinnen 24 gleichmäßig verteilt werden und verhindert werden, daß zuviel Saatgut in diesen Bereich eintritt und die Trennleiste "kurzschließt".

Eine Dichtleiste 60 ist stromabwärts unmittelbar hinter dem Auslaß 16 im Saatgutabgaberaum vorgesehen. Sie kann aus einem von der Halteleiste 42 abgetrennten Stück bestehen und verhindert, daß Saatgut aus dem Bereich 18 direkt in den Auslaß 16 gelangen kann.

Mit Ausnahme der Regulierungsleiste 50 sind die übrigen Leisten 40, 42, 60 in ihrem abgewickelten Zustand in Fig. 5 dargestellt. Alle Leisten können lösbar mit der inneren Peripherie des Gehäuses 12 beispielsweise durch nicht gezeigte Haken und Ösen verbunden sein. Eine dauerhafte Befestigung, beispielsweise durch Verkleben, ist ebenfalls möglich.

Die Trenn-, Halte-, Dicht- und Regulierungsleisten können aus elastischen und/oder federnden Streifen aus Polymere, wie Polyurethane gebildet werden, die zur Bildung der Zähne, Leisten usw. einfach quer eingeschnitten oder entsprechend gekerbt werden. Die Trennleiste 40 ist dabei relativ schmal und so eingekerbt, daß spitze Zähne 62 entstehen. Außerdem können die Längsseiten 64 noch schräg angeschnitten sein. Der Streifen für die Halteleiste 42 ist kürzer und breiter. Auch dieser Streifen ist mit quer verlaufenden Einkerbungen aber auch mit einer mittigen Längskerbe versehen, damit Doppelzähne 66 entstehen. Die Dichtleiste 60 kann ein von der Halteleiste 42 abgeschnittenes Stück sein. Die Regulierungsleiste 50 ist ein blattförmiger Streifen, der geschlitzt sein kann, um entsprechend dünne Zähne zu bilden, die allerdings breiter sein können.

## Patentansprüche

1. Dosiergerät für Saatgut mit einem einen Einlaß (14) und einen Auslaß (16) aufweisenden Gehäuse (12), mit einem in dem Gehäuse (12) umlaufenden und Saatgutrinnen (24) aufweisenden Verteilerelement, mit einer das Saatgut in dem Verteilerelement haltenden Halteleiste (42) von geringerer Länge als der Verteilerelementumfang und mit einer Trennleiste (40) für überschüssiges Saatgut, dadurch gekennzeichnet, daß das Verteilerelement als Särad (20) mit auf seiner Mantelfläche vorgesehenen und sich radial erstreckenden Rippen (22) ausgebildet ist, zwischen denen die Saatgutrinnen (24) liegen, daß das Särad (20) eine Abgabeseite aufweist, an der die Rippen (22) mit Saatguttaschen (34) bildenden Fingerelementen (32) versehen sind, daß die Halteleiste (42) oberhalb der Saatguttaschen (34) vorgesehen ist und daß die Trennleiste (40) von dem Raum oberhalb des Särades (20) einen mit dem Auslaß (16) verbundenen Saatgutabgaberaum abtrennt, in dem zumindest ein Teil der Halteleiste (42) vorgesehen ist.

2. Dosiergerät nach Anspruch 1, dadurch gekennzeichnet, daß die Rippen (22) zumindest auf einem Teil ihrer Länge gegenüber der Drehachse des Särades (20) abgewinkelt sind.

3. Dosiergerät nach Anspruch 2, dadurch gekennzeichnet, daß die Rippen (22) im Bereich der Abgabeseite des Särades (20) koaxial zur Drehachse des Särades (20) verlaufen.

4. Dosiergerät nach Anspruch 1, dadurch gekennzeichnet, daß die Halteleiste (42) und die Trennleiste (40) nebeneinander an dem Gehäuse (12) angeordnet sind, die Trennleiste (40) eine größere Länge als die Halteleiste (42) aufweist und daß der Anfang der Halteleiste (42) mit Bezug auf die Umlaufrichtung des Särades (20) vor dem Anfang der Trennleiste (40) liegt.

5. Dosiergerät nach einem oder mehreren der vorherigen Ansprüche, dadurch gekennzeichnet, daß die Trennleiste (40) mit elastischen Zähnen (62) versehen ist, die sich zumindest teilweise bis in die Saatgutrinnen (24) erstrecken.

6. Dosiergerät nach einem oder mehreren der vorherigen Ansprüche, dadurch gekennzeichnet, daß die Trennleiste (40) zum Abdrängen des Saatgutes von dem Saatgutabgaberaum zumindest auf einem Teil ihrer Länge keilförmig ausgebildet ist.

7. Dosiergerät nach einem oder mehreren der vorherigen Ansprüche, dadurch gekennzeichnet, daß die Trennleiste (40) mit Bezug auf die Umlaufrichtung des Särades (20) stromabwärts des Auslasses (16) endet, daß der Saatgutabgaberaum stromabwärts des Auslasses (16) durch eine Dichtleiste (60) verschlossen ist und daß eine Regulierungsleiste (50) im Bereich des Trennleistenanfangs vorgesehen ist.

8. Dosiergerät nach Anspruch 5, dadurch gekennzeichnet, daß die radiale Länge der Zähne (62) der Trennleiste (40) sich, vom Trennleistenanfang aus gesehen, stetig vergrößert.

9. Dosiergerät nach einem oder mehreren der vorherigen Ansprüche, dadurch gekennzeichnet, daß die Halteleiste (42) mit elastischen Zähnen (66) von gleichbleibender Länge versehen ist.

## Claims

1. A metering device for seed material, with a housing (12) having an inlet (14) and an outlet (14), a distributing element rotating in the housing (12) and having seed material channels (24), a retaining strip (42) ring the seed material in the distributing element and of smaller length than the periphery of the distributing element, and a divider strip (40) for excess seed material, characterized in that the distributing element is in the form of a seed wheel (20) with radially extending ribs (22) on its peripheral surface, between which the seed material channels (24) lie, in that the seed wheel (20) has a discharge side at which the ribs (22) are provided with finger elements (32) forming seed material pockets (34), in that the retaining strip (42) is provided over the seed material pockets (34) and in that the divider strip (40) divides a seed material discharge space connected to the outlet (16) from the space above the seed wheel (20), in which discharge space at least a part of the retaining strip (42) is provided.

2. A metering device according to claim 1, characterized in that the ribs (22) are inclined relative to the axis of rotation of the seed wheel (20) at least over part of their length.

3. A metering device according to claim 2, characterized in that the ribs (22) extend coaxial with the axis of rotation of the seed wheel (20) in the region of the discharge side of the seed wheel (20).

4. A metering device according to claim 1, characterized in that the retaining strip (42) and the divider strip (40) are arranged beside each other in the housing (12), the divider strip (40) has a greater length than the retaining strip (42) and in that the start of the retaining strip (42) lies before the start of the divider strip (40) with reference to the direction of rotation of the seed wheel (20).

5. A metering device according to one or more of the preceding claims, characterized in that the divider strip (40) is provided with elastic teeth (62) which extend at least partially into the seed material channels (24).

6. A metering device according to one or more of the preceding claims, characterized in that the divider strip (40) is wedge-shaped over at least part of its length, for urging the seed material away from the seed material discharge space.

7. A metering device according to one or more of the preceding claims, characterized in that the divider strip (40) ends in relation to the direction of rotation of the seed wheel (20) downstream of the outlet (16), in that the seed discharge space is closed downstream of the outlet (16) by a sealing strip (60) and in that a regulating strip (50) in provided in the region of the start of the divider strip.

8. A metering device according to claim 5, characterized in that the radial length of the teeth (62) of the divider strip (40) increases constantly as regarded from the start of the divider strip.

9. A metering device according to one or more of the preceding claims, characterized in that the retaining strip (42) is provided with elastic teeth (66) of uniform length.

## Revendications

1. Dispositif de dosage pour semence, comportant un boîtier (12) possédant une entrée (14) et une sortie (16), un élément distributeur qui tourne dans le boîtier (12) et possède des rainures (24) pour la semence, une barrette de retenue (42) retenant la semence dans l'élément distributeur et possédant une longueur inférieure au périmètre de l'élément distributeur et une barrette de séparation (40) pour de la semence en excès, caractérisé en ce que l'élément distributeur est agencé sous la forme d'une roue de semis (20) comportant des nervures radiales (22), qui sont prévues sur sa surface enveloppe et entre lesquelles sont situées les rainures (24) pour la semence, que la roue de semis (20) possède un côté de délivrance, au niveau duquel les nervures (22) sont pourvues d'éléments en forme de doigts (32) formant des logements (34) pour la semence, que la barrette de retenue (42) est prévue au-dessus des logements (34) pour la semence et que la barrette de séparation (40) sépare un espace de délivrance de la semence, qui est relié à la sortie (16) et dans lequel est prévue au moins une partie de la barrette de retenue (42), de l'espace situé au-dessus de la roue de semis (20).

2. Dispositif de dosage selon la revendication 1, caractérisé en ce que les nervures (22) sont coudées par rapport à l'axe de rotation de la roue de semis (20), au moins sur une partie de leur longueur.

3. Dispositif de dosage selon la revendication 2, caractérisé en ce que les nervures (22) s'étendent coaxialement à l'axe de rotation de la roue de semis (20), dans la zone située du côté de délivrance de la roue de semis (20).

4. Dispositif de dosage selon la revendication 1, caractérisé en ce que la barrette de retenue (42) et la barrette de séparation (40) sont disposées côte-à-côte dans le boîtier (12), que la barrette de séparation (40) possède une longueur supérieure à celle de la barrette de retenue (42) et que le début de la barrette de retenue (42) est situé en amont du début de la barrette de séparation (40) dans le sens de rotation de la roue de semis (20).

5. Dispositif de dosage selon une ou plusieurs des revendications précédentes, caractérisé en ce que la barrette de séparation (40) est pourvue de dents élastiques (62), qui s'étendent au moins en partie jusque dans les rainures (24) pour la semence.

6. Dispositif de dosage selon une ou plusieurs des revendications précédentes, caractérisé en ce que la barrette de séparation (40) est agencée avec une forme en coin sur au moins une partie de sa longueur, pour le refoulement de la semence hors de l'espace de délivrance de la semence.

7. Dispositif de dosage selon une ou plusieurs des revendications précédentes, caractérisé en ce que la barrette de séparation (40) se termine en aval de la sortie (16) dans le sens de rotation de la roue de semis (20), que l'espace de délivrance de la semence est fermé par une barrette d'étanchéité (60), en aval de la sortie (16) et qu'une barrette de régulation (50) est prévue dans la zone du début de la barrette de séparation.

8. Dispositif de dosage selon la revendication 5, caractérisé en ce que la longueur radiale des dents (62) de la barrette de séparation (40) augmente de façon continue, à partir du début de la barrette de séparation.

9. Dispositif de dosage selon une ou plusieurs des revendications précédentes, caractérisé en ce que la barrette de retenue (42) est pourvue de dents élastiques (66) de même longueur.
